# EUROPÄISCHE PATENTANMELDUNG

(11) **EP 1 417 880 A2**
(43) Veröffentlichungstag der Anmeldung: **12.05.2004**
(21) Anmeldenummer: 03023399.3
(22) Anmeldetag: 17.10.2003
(51) Int. Cl.: A01F 25/20

(54) **Aufnahmevorrichtung für Futter an Futtermischwagen**

(30) Priorität: 09.11.2002 DE 20217399 U
(71) Anmelder: B. Strautmann & Söhne GmbH & Co., D-49196 Bad Laer (DE)
(72) Erfinder: Strautmann, Heinrich Bernhard, 49196 Bad Laer (DE); Uhlemann, Ernst, 49326 Melle (DE)

(57) **Zusammenfassung**

Die Aufnahmeeinrichtung (12) für Futter an Futtermischwagen (1) ist zur Verbesserung der Portionierung des einzubringenden Futters, welches in bestimmten Schnittbreiten (A) von einem Flachsilo (32) abgetrennt wird, mit einem Abstandsmeßgerät (35) ausgestattet, welches die vom Bediener (Schlepperfahrer) schwer einsehbare Schnittbreite (A) mißt und sie diesem mitteilt. Der Bediener ist dadurch in der Lage durch Festlegung einer gewünschten Schnittbreite (A), die einzubringende Futtermenge genauer zu bestimmen.

Das Abstandsmeßgerät (35) teilt hierzu die Meßergebnisse einer vom Bediener leicht einsehbaren Datenanzeige (27) mit.

Die Abstandsmessung ist über Strahlen (Infrarot-, Ultraschall-, etc.) oder durch mechanische Arbeitsmittel möglich.

## Beschreibung

Die vorliegende Erfindung betrifft eine Aufnahmevorrichtung für Futter an Futtermischwagen entsprechend dem Oberbegriff des Anspruches 1.

Derartige Aufnahmevorrichtungen sind an Futtermischwagen mit vertikalen Mischschnecken oder auch umlaufenden Mischketten bekannt, z.B. nach der europäischen Patentanmeldung EP 0506158.

Die Einbringung des Futters in den Mischraum erfolgt im allgemeinen in Portionen, die der Schnittbreite zwischen der am Flachsilo anliegenden Rückwand und der Schnittlinie des Schneidwerkes entsprechen.

Für die Dosierung der einzubringenden Futtermengen sind keine Hilfsmittel bekannt.

Die kontinuierliche Gewichtskontrolle der eingebrachten Futtermenge an Futtermischwagen dieser Art über eine Gewichtsmessung, ist nicht sinnvoll realisierbar, da eine Wiegeeinrichtung während des laufenden Schneidvorganges oder bei einer Unterbrechung desselben, die abgetrennte Futtermenge nicht wiegen kann, da ein dazu notwendiges Freistellen des Futtermischwagens vom Flachsilo, während des Schneidvorganges, nicht problemlos möglich ist.

Eine Einbringung geringerer Futtermengen durch Volumeneinschätzung, die dann gewünscht wird, wenn auf Grund von Erfahrungswerten eine Futtermenge, zur Verbesserung des Füllungsgrades oder des Mischverhältnisses zwischen den Futterarten, eingefüllt werden soll, die z.B. einer halben Menge der vollen Schnittbreite entspricht, ist derzeit nicht ohne weiteres möglich, da wegen der Unübersichtlichkeit bei der Rückwärtsfahrt am Flachsilo eine unterschiedliche Schnittbreite nicht exakt eingestellt werden kann und die Beendigung des Schneidvorganges auf halber Höhe, keine geeignete Lösung darstellt, da bei einer Trennung eine unsaubere Silowand entsteht und gleichtzeitig starke Bröckel- und Rieselverluste entstehen.

Um die saubere Einbringung von Futtermengen zu ermöglichen, die nicht der allgemein üblichen maximalen Schnittdicke entsprechen, wurde erfindungsgemäß eine Meßvorrichtung geschaffen, welche im Bereich zwischen Rückwand und Schnittlinie des Schneidwerkes, beim unübersichtlichen Rückwärtsfahren am Flachsilo den Abstand ermittelt.

Zwar sind berührungslose Abstandsmeßvorrichtungen, z.B. für PKW oder auch andere selbstfahrende Maschinen bekannt, die bei Rückwärtsfahrten den zu befahrenden Raum überwachen und über optische oder akustische Warnsignale im Weg stehende Objekte anzeigen, die spezifische Anwendung am Futtermischwagen ist jedoch so nicht möglich. Hierfür sind Maßnahmen zur Anpassung an den erfindungsgemäßen Verwendungszweck notwendig.

Nachstehend wird die Erfindung an einem Ausführungsbeispiel beschrieben und in den Zeichnungen dargestellt.

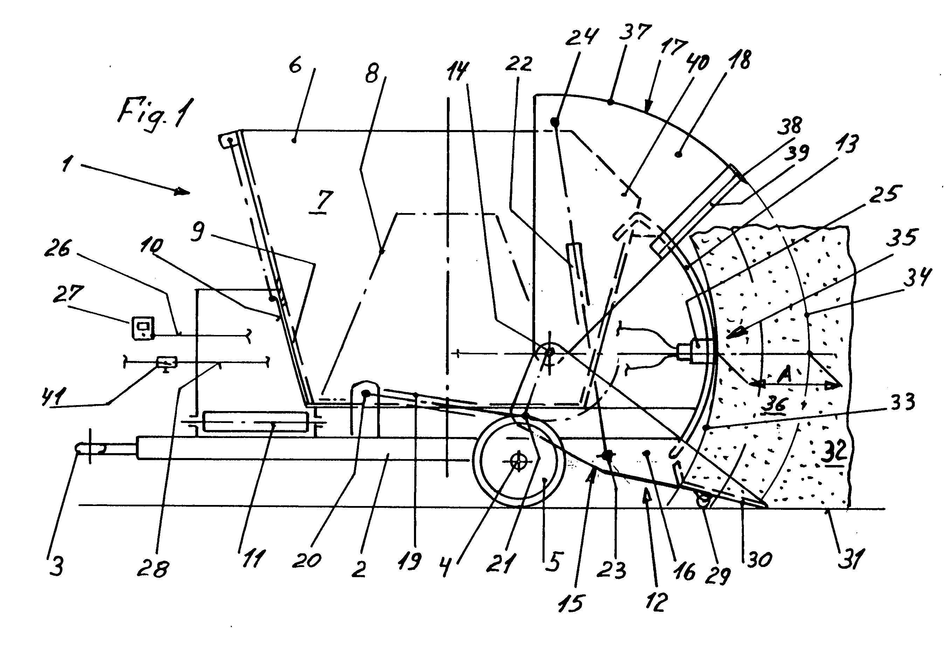

- Fig. 1: zeigt die Seitenansicht eines Futtermischwagens in Arbeitsstellung an einem Flachsilo.

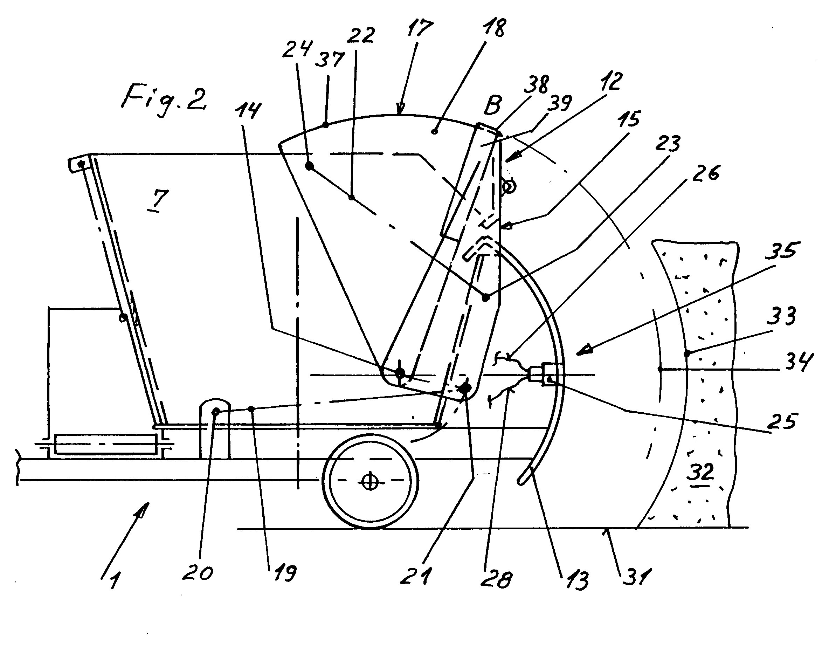

- Fig. 2: zeigt den Futtermischwagen in Überlade- und in Transportstellung.

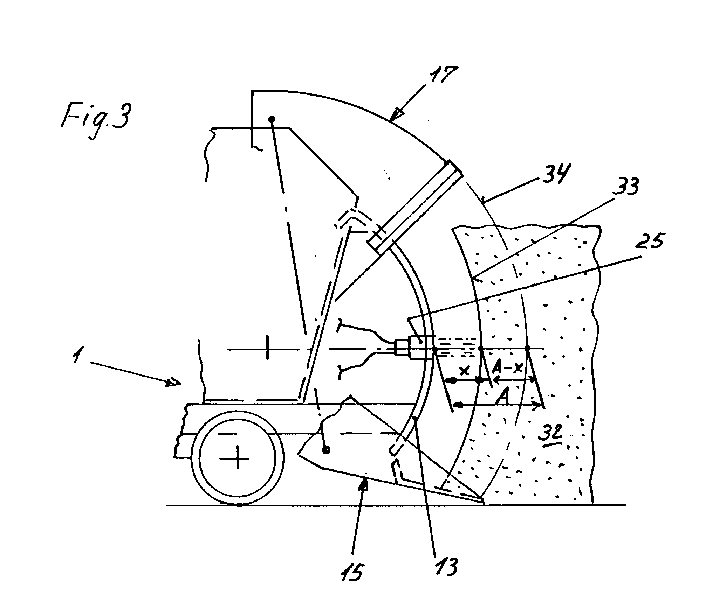

- Fig. 3: zeigt eine weitere Teilansicht.

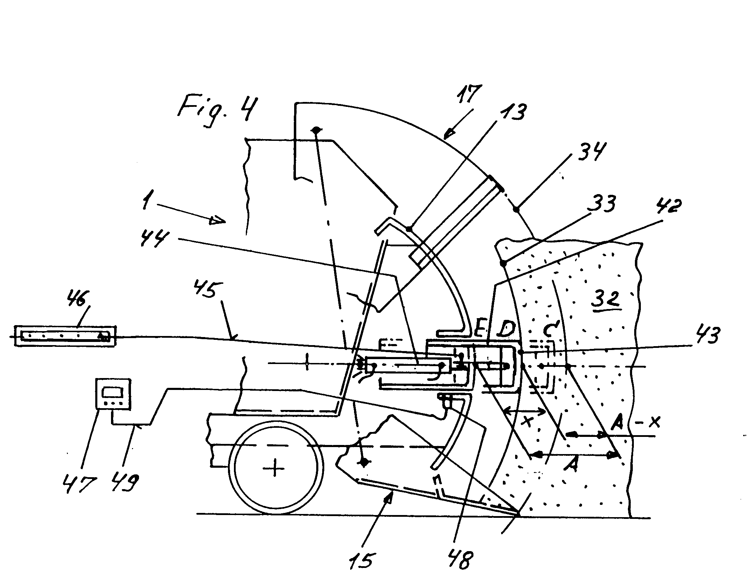

- Fig. 4: zeigt eine Ausführung mit mechanischem Fühler.

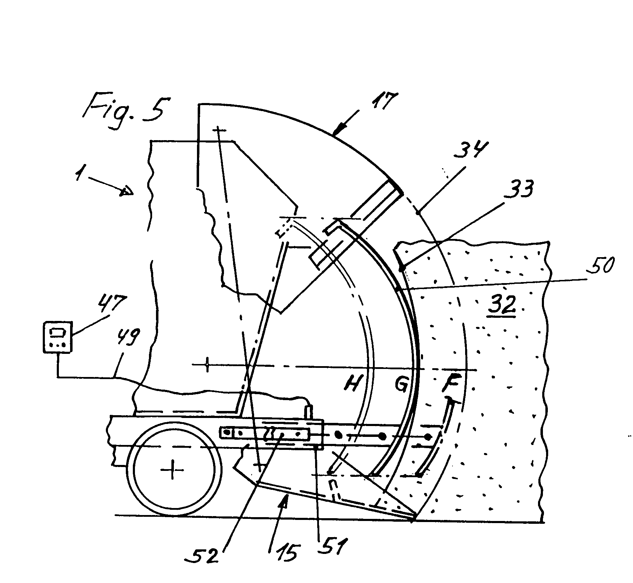

- Fig. 5: zeigt ein weiteres mechanisches Ausführungsbeispiel.

Der mit der Aufnahmevorrichtung 12) ausgestattete Futtermischwagen 1) wird von einem nicht näher dargestellten Schlepper verfahren und angetrieben.

Der Futtermischwagen 1) besteht im wesentlichen aus dem Fahrgestell 2) mit der Zugdeichsel 3), einer Achse 4) und Rädern 5) und dem Mischbehälter 6), in dessen Mischraum 7) eine kegelförmige Mischschnecke 8) während des Mischvorganges rotiert. Am Mischbehälter 6) ist eine Luke 9) mit dem Schieber 10) angebracht, durch die das fertige Futter zur Verteilung auf einer Seite im Futtergang über ein Förderband ausgebracht wird. Am Heck des Futtermischwagens 1) ist die Aufnahmevorrichtung 12) angeordnet, die im wesentlichen aus der fest am Futtermischwagen 1) angebrachten kreisbogenförmigen Rückwand 13) besteht, deren Mittelpunkt eine Achse 14) bildet, auf welcher die Ladeklappe 15), an ihren Schwingen 16) und das Schneidwerk 17), an seinen als Schwingen wirkenden Seitenwänden 18), schwenkbar gelagert sind.

Die Ladeklappe 15) wird beidseitig über Hydrozylinder 19), die an Lagerpunkten 20) am Fahrgestell 2) und an Lagerpunkten 21), an der Ladeklappe 15) angreifen, verschwenkt.

Das Schneidwerk 17) wird über Hydrozylinder 22), die zwischen den Lagerpunkten 23), an der Ladeklappe 15) und an den Lagerpunkten 24), am Schneidwerk 17) angreifen, verschwenkt.

Zur Schnittmengenregelung ist ein Abstandsmeßgerät 35), im wesentlichen bestehend aus einem Sensor 25) mit Rechner, der Datenanzeige, bzw. einem Display 27) und den Leitungen 26) und 28), vorgesehen.

In der Rückwand 13) ist mindestens ein Sensor 25) angeordnet, der durch die Aussendung von Strahlen, wie Ultraschall-, Infrarot-, Laserstrahlen etc., eine Abstandsmessung, mindestens im Bereich bis zur maximalen Schnittbreite A) vornimmt. Die durch den Sensor 25) ermittelten Werte werden über eine Leitung 26) dem Display 27) übermittelt, wobei dieses vorzugsweise im Blickfeld des Bedieners, im allgemeinen des Schlepperfahrers, evtl. in der Schlepperkabine, gut ablesbar angeordnet wird. Die Stromversorgung von Sensor 25) und Display 27) erfolgt vom Schlepper über eine Leitung 28).

Wird der Futtermischwagen 1) beladen, so wird er zunächst rückwärts, mit über die Hydrozylinder 19) abgesenkter Ladeklappe 15) und mit über die Hydrozylinder 22) angehobenem Schneidwerk 17), so weit an das Fahrsilo 32) herangefahren, bis die Rückwand 13) gegen diesen stößt, d.h. die Rückwand 13) liegt im allgemeinen an einer vorherigen Schnittfläche 33) an. Die Schürfkante 30), die von Rollen 29) am Siloboden 31) geführten Ladeklappe 15), wird hierbei bis unter das Flachsilo 32) geschoben. Danach wird das Schneidwerk 17) mittels der Hydrozylinder 22) entlang der Schnittlinie 34) bis zum Siloboden 31) abgesenkt. Hierbei wird ein Futterpaket abgetrennt, das unten auf dem, unter das Flachsilo 32) geschobenen Teil der Ladeklappe 15) steht und hinten von der Haube 37) des Schneidwerkes 17), seitlich von den beiden Seitenwänden 18) und nach vorn von der Rückwand 13) begrenzt wird. Die Trennarbeit verrichten in bekannter Weise an der Unterseite u-förmig angebrachte, unter der Haube 37) und an den Seitenwänden 18) angeordnete, oszillierende Schneidmesser 38) u. 39).

Das so gewonnene Futterpaket 36) wird von der Ladeschaufel 15) gemeinsam mit dem Schneidwerk 17) bis in eine Position B) angehoben. Hierbei fallen, bzw. rutschen Teile des Futterpaketes 36) nach und nach über die obere Kante der Rückwand 13), durch die durch Verkürzung der hinteren Mischraumwand gebildete Öffnung 40), in den Mischraum 7).

Nach vollständiger Übergabe des Futterpaketes wiederholt sich, bis zur gewünschten Befüllung des Mischraumes 7), der Schneidvorgang im allgemeinen mehrmals.

Wird nun für die Eingabe in den Mischraum 7) die Zuführung einer geringeren Futtermenge gewünscht, so wird über einen Schalter 41). der über die Leitung 28) vom Schlepper gelieferte Versorgungsstrom für das Abstandsmeßgerät 35) freigegeben. Der Sensor 25), mit seinem Rechner, ermittelt nun beim Rückwärtsfahren an den Flachsilo 32) heran, mittels seiner ausgesendeten Strahlen, im variablen Bereich X), zwischen Schnittlinie 34) und Rückwand 13), die Abstandswerte. Die ermittelten Daten werden über die Leitung 26) zum Display 27) geleitet. Die Bedienperson, im allgemeinen der Schlepperfahrer, kann dann die dort angezeigten Abstandswerte ablesen und den Futtermischwagen 1) so verfahren, bis die gewünschte Schnittdicke A - X) erreicht ist.

Der nun folgende Schneidvorgang trennt dann über die gesamte Silohöhe, die mit angezeigter Schnittdicke A - X) eingestellte Futtermenge ab und lädt diese durch gemeinsames Hochschwenken von Ladeklappe 15) und Schneidwerk 17) in den Mischraum 7) ein.

Nach abgeschlossenem Ladevorgang, Ladeklappe 15) und Schneidwerk 17) befinden sich in Lage B), befindet sich der Futtermischwagen 1) in Transportstellung.

Die Abstandsmessung kann auch über einen mechanischen Fühler 42, erfolgen. Der an der Innenseite der Rückwand 13) ausschiebbar angeordnet ist und z.B. über einen Seilzug eine Anzeige betätigt.

Der hier dargestellte mechanische Fühler 42), der sich über die volle Entnahmebreite oder nur über einen Teil derselben erstreckt, wird in die durchbrochene Rückwand 13) integriert. In unbenutzter Stellung E) und beim Verschwenken der Ladeklappe 15), steht die Stirnfläche 43), des Fühlers 42) derart, daß sie mit der Oberfläche der Rückwand 13) eine glatte, nicht vorstehende Fläche bildet (Stellung E).

Zur Messung der Schnittdicke wird bei angehobenem Schneidwerk 17), der Fühler 42), über mindestens einen Hydrozylinder 44) bis in die Stellung C) angeschoben.

Beim Heranfahren an den Flachsilo 32) trifft der Fühler 42) zunächst auf die Schnittfläche 33), beim weiteren Zurücksetzen wird beim dabei stattfindenden Einschieben des Fühlers 42) über ein Verbindungsmittel, z.B. einen Seil- oder Bowdenzug 45), im Blickfeld des Bedieners im Anzeigeinstrument 46) betätigt, welches eine Wegeanzeige erhält und welches die jeweilige Schnittdicke A - X) anzeigt (Fühler 42 in Stellung D).

Die Schnittdickenermittlung kann auch in einem Display angezeigt werden, hierbei werden die ermittelten Abstandsdaten über Sensoren 48) abgefragt und über ein Kabel 49) zum Display 47) übertragen.

Die Betätigung der Ladeklappe 15) ist derart gesichert, daß eine Bewegung nur eingeleitet werden kann, wenn der Fühler 42) sich in der Stellung E) befindet.

In einen weiteren Ausführungsbeispiel wird gezeigt, wie die starre Rückwand 13) durch eine verschiebbare Rückwand 50) ersetzt wird. Die Rückwand 50) wird in Schienen 31) geführt und von Hydrozylindern 52) ein- oder ausgeschoben. Der Verstellbereich liegt zwischen den Stellungen F) u. H). Der Abstand der Schnittfläche 33), Stellung G), wird in der gleichen Weise gemessen wie in dem Ausführungsbeispiel mit dem Fühler 42). Damit die Ladeklappe 15) beim Anheben nicht unter die Rückwand 50) stoßen kann, wird diese so gesteuert, daß ein Anheben nur möglich ist, wenn sich die Rückwand 50) in der Stellung H) befindet.

Das eingebrachte Futter kann von einer elektronischen Wiegeeinrichtung kontrolliert werden, so ist bei etwa gleichmäßig hohen Flachsilos eine annähernd genaue Bemessung der Futtermenge derart möglich, daß zunächst eine volle Schnittbreite vom Flachsilo abgetrennt, in den Mischraum eingebracht und anschließend gewogen wird. Das gewogene Gewicht wird von einem Rechner der Wiegeeinrichtung erfaßt und in ein Verhältnis zur Schnittdicke umgerechnet und im Display der Wiegeeinrichtung dargestellt, wobei vorzugsweise das Gewicht zur Schnittdicke, in kg/cm oder in einem ähnlichen Verhältnis, angezeigt wird. Der Bediener hat damit die Möglichkeit entsprechend der angezeigten Werte eine entsprechende Schnittdicke zu wählen und einzustellen.

## Patentansprüche

1. Aufnahmevorrichtung für Futter an Futtermischwagen, die an der Rückseite derselben angeordnet ist (und eine kreisbogenförmige Rückwand einschließt), auf deren Mittelachse eine Ladeklappe und ein Schneidwerk jeweils verschwenkbar gelagert sind, **dadurch gekennzeichnet, daß** in der Rückwand 13) ein Abstandsmeßgerät 35) angeordnet ist, welches einen Meßbereich zwischen der Schnittlinie 34) des Schneidwerkes 17) und der Rückwand 13) erfaßt.

2. Aufnahmevorrichtung nach Anspruch 1, **dadurch gekennzeichnet, daß** das Abstandsmeßgerät 35) mit mindestens einem Sensor 25) ausgestattet ist, dessen Strahlen im Meßbereich den Abstand zur Silowand, bzw. zu einer vorhandenen Schnittfläche 33) ermitteln.

3. Aufnahmevorrichtung nach den Ansprüchen 1 u. 2, **dadurch gekennzeichnet, daß** die ermittelten Meßwerte in einem Display 27) ablesbar dargestellt werden.

4. Aufnahmevorrichtung nach den Ansprüchen 1-3, **dadurch gekennzeichnet, daß** die ermittelten Meßwerte die Dicke der jeweiligen Schnittdicke im Display 27) in Zahlenwerten, wie Zentimeter, Meter etc., anzeigen.

5. Aufnahmevorrichtung nach Anspruch 1, **dadurch gekennzeichnet, daß** das Abstandsmeßgerät einen hydraulisch betätigten, ein- und ausschiebbaren Fühler 42) besitzt.

6. Aufnahmeeinrichtung nach den Ansprüchen 1 und 5, **dadurch gekennzeichnet, daß** die Breite des Fühlers 42) sich über die gesamte Entnahmebreite oder einen Teil derselben erstreckt.

7. Aufnahmeeinrichtung nach den Ansprüchen 1, 5 u. 6, **dadurch gekennzeichnet, daß** eine verschiebbare Rückwand 50), als mechanischer Fühler ausgebildet ist.

8. Aufnahmeeinrichtung nach den Ansprüchen 1, 5, 6 u. 7, **dadurch gekennzeichnet, daß** die Rückwand 50), von Schienen 51) geführt, von Hydrozylindern 52) ein- oder ausgeschoben wird.

9. Aufnahmeeinrichtung nach den Ansprüchen 1 u. 5 - 8, **dadurch gekennzeichnet, daß** sich mechanischer Fühler 42) oder Rückwand 50), beim Anheben der Ladeklappe 15), jeweils in ihrer Stellung E) bzw. H) befinden.

10. Aufnahmevorrichtung nach den Ansprüchen 1 - 9, **dadurch gekennzeichnet, daß** eine Wiegeeinrichtung mit Rechner das Gewicht einer maximalen Schnittdicke A) in ein Verhältnis zu einer Schnittdicke A - X) umrechnet und im Display der Wiegeeinrichtung anzeigt.
